# EUROPÄISCHE PATENTSCHRIFT

(11) **EP 2 388 196 B1**
(45) Veröffentlichungstag und Bekanntmachung des Hinweises auf die Patenterteilung: **24.09.2014**
(21) Anmeldenummer: 11163629.6
(22) Anmeldetag: 26.04.2011
(51) Int. Cl.: B65B 3/02, B29C 49/42, B65G 47/84, B65B 55/02

(54) **Rotierende Vorrichtung und Verfahren zum Überführen von Artikeln**
Rotating device and method for transferring articles
Procédé et dispositif rotatif pour transférer des articles

(30) Priorität: 17.05.2010 DE 102010020724
(43) Veröffentlichungstag der Anmeldung: 23.11.2011
(73) Patentinhaber: Krones AG, 93073 Neutraubling (DE)
(72) Erfinder: Voth, Klaus, 93073 Obertraubling (DE)
(74) Vertreter: Benninger, Johannes

(56) Entgegenhaltungen:
- EP-A1- 1 970 329
- WO-A1-98/22374
- DE-A1- 19 906 438
- DE-A1- 19 928 325
- US-A- 5 683 729
- US-B1- 7 438 192

## Beschreibung

Die vorliegende Erfindung betrifft eine rotierende Vorrichtung und ein Verfahren zum Transport von Artikeln von einer ersten Verarbeitungsvorrichtung zu einer zweiten Verarbeitungsvorrichtung, wobei der Abstand der Artikel in der ersten Verarbeitungsvorrichtung ungleich dem Abstand der Artikel in der zweiten Verarbeitungsvorrichtung ist und wobei die Vorrichtung eine Mehrzahl von Greifvorrichtungen zum Greifen und Festhalten der Artikel aufweist, die elektronisch steuerbar sind.

Beim Herstellen von Behältern aus einem thermoplastischen Material werden so genannte Vorformlinge verwendet, die durch Blasformen in die gewünschte Form gebracht werden. Die Vorformlinge werden zuerst entlang eines Transportweges im Bereich einer Heizstrecke thermisch konditioniert. D.h. die Vorformlinge werden erwärmt, bevor der anschließende Blasformprozess durchgeführt wird, bei dem die Vorformlinge durch Drucklufteinwirkung in den gewünschten Behälter umgeformt werden.

Die Vorformlinge kommen in geringen Abständen aus der Heizstrecke und werden im Allgemeinen über so genannte Transfer- oder Übergabesterne in die nachfolgende Blasmaschine übergeben. Der Abstand zwischen den Vorformlingen muss vor dem Streckblasen entsprechend der Größe und dem Abstand der verwendeten Blasformen vergrößert werden.

Herkömmlicherweise geschieht dies, indem die Halteklammern für die Vorformlinge in radialer Richtung auseinander und tangential verfahren werden.

Das Dokument WO 2006/050935 offenbart ein Verfahren und eine Vorrichtung zum Transportieren von Behältern, die einen Tragring oder dergleichen aufweisen. Hierbei ist eine radiale Steuerung der Greifelemente durch hydraulische oder pneumatische Vorrichtungen möglich.

DE 10 2006 023 531 A1 zeigt eine Vorrichtung zum Transportieren von Stückgut mit einer drehbaren Trägereinrichtung und einer Vielzahl von Transportarmen, die schwenkbar gegenüber der Trägereinrichtung an dieser angeordnet sind. Hierbei ist die Bewegung wenigstens eines Transportarmes unabhängig von der Bewegung eines weiteren Transportarmes steuerbar.

WO 1998 022374 A1 zeigt ein Servo getriebenes, Computer kontrolliertes Transfersystem für Behälter. Das System ersetzt bekannte Transfersterne und kann eine Vielzahl von Behältern verschiedener Ausmaße transportieren, da es sich aufgrund des Servo getriebenen Greifmechanismus und der Computerkontrolle um ein "intelligentes" System handelt. Servomotoren bewegen die Greifarme, so dass diese sicher den Behälter fassen können.

DE 19927325 A1 beschreibt eine Abfüllvorrichtung für Flaschen. Die Flaschen werden durch formschlüssige Transportelemente teilungsgerecht zwischen den Maschinen überführt. Es wird eine Steuerungsvorrichtung 33 für die steuerbaren Greifzangen 28 des Transportsterns 6 beschrieben, allerdings keine Aussage zur Anordnung derselben getroffen.

Das Dokument EP 1970329 A1 beschreibt eine Fördervorrichtung für Artikel mit eine Mehrzahl von Transfersternen, wobei jeder Transferstern eine Mehrzahl von Greifvorrichtungen aufweist, die in gleichen Abständen in deren Umfang angeordnet sind. Die Artikel werden von den Greifvorrichtungen eines Transfersterns zu den Greifvorrichtungen eines nächsten Transfersterns übergeben. Hierbei ist eine Steuerungsvorrichtung vorgesehen, die eine Kollision der Greifvorrichtungen benachbarter Transfersterne vermeidet, wenn beispielsweise einer ausfällt und plötzlich anhält.

Die DE 19906438 A1 zeigt eine Vorrichtung zur Übergabe von Behältern im Anschluss an eine Blasformung. Zur Übergabe der Behälter ist ein Ausgaberad vorgesehen, das die Behälter in mindestens zwei parallelen Transportwegen anordnen kann. Das Ausgaberad umfasst mindestens zwei Halteelemente für Behälter, die positionsveränderlich angeordnet sind, dass eine Anordnung der Aufnahmen der Halteelemente für die Behälter hintereinander oder nebeneinander möglich ist.

Aufgabe der vorliegenden Erfindung ist es, eine platzsparende Transfervorrichtung bereitzustellen, mittels derer die Abstände von zu transportierenden Artikeln einfach verändert werden können.

Die obige Aufgabe wird durch eine rotierende Vorrichtung und ein Verfahren gelöst, die die Merkmale der Patentansprüche 1 und 8 umfassen. Weitere vorteilhafte Ausgestaltungen werden durch die Unteransprüche beschrieben.

Die Erfindung betrifft eine rotierende Vorrichtung, insbesondere einen Transferstern, zum Transport von Artikeln von einer ersten Verarbeitungsvorrichtung zu einer zweiten Verarbeitungsvorrichtung. Beispielsweise dient ein solcher Transferstern dem Transport von Vorformlingen von einer Heizstrecke zu einem Blasformmodul, in dem die Vorformlinge zu den gewünschten Behältern umgeformt werden.

Die rotierende Vorrichtung weist eine Mehrzahl von Übergabearmen mit Greifvorrichtungen zum Greifen und Festhalten der Artikel auf. Die Greifvorrichtungen greifen die Artikel in einem bestimmten Bereich. Handelt es sich bei den Artikeln beispielsweise um Vorformlinge oder Flaschen, dann greifen die Greifvorrichtungen, dabei kann es sich um Greifklammern, Greifzangen o.ä. handeln, beispielsweise deren Halsbereich, insbesondere unterhalb eines so genannten Tragrings. Die Greifvorrichtungen sind vorzugsweise elektronisch steuerbar.

Der Abstand der Artikel in der ersten Verarbeitungsvorrichtung, beispielsweise der Heizstrecke, entspricht nicht dem Abstand der Artikel in der zweiten Verarbeitungsvorrichtung, beispielsweise dem Blasformmodul. Insbesondere ist der Abstand der in das Blasformmodul einlaufenden Artikel größer als der Abstand der Artikel in der Heizstrecke. Insbesondere sind die Greifvorrichtungen derart elektronisch steuerbar, dass der Abstand der durch die rotierende Vorrichtung an die zweite Verarbeitungsvorrichtung weitergegebenen Artikel ungleich dem Abstand der durch die rotierende Vorrichtung von der ersten Verarbeitungsvorrichtung entnommenen Artikel ist.

Erfindungsgemäß sind den Übergabearmen mit den Greifvorrichtungen Servomotoren und jeweils eine elektronische Steuervorrichtung zugeordnet. Jeweils eine elektronische Steuervorrichtung ist auf jeweils einem Übergabearm der rotierenden Vorrichtung angeordnet. Diese dienen der Steuerung des Abstands der in die zweite Verarbeitungsvorrichtung einlaufenden Artikel. Der Abstand der in die zweite Verarbeitungsvorrichtung einlaufenden Artikel ist durch die Steuervorrichtung der rotierenden Vorrichtung steuerbar. Insbesondere werden durch die elektronische Steuervorrichtung Servomotoren angesteuert, mit denen die Abstände der Greifvorrichtungen an der rotierenden Vorrichtung entsprechend verändert werden können. Die den Übergabearmen zugeordneten Greifvorrichtungen sind durch die Servomotoren und die dem jeweiligen Übergabearm zugeordnete elektronische Steuervorrichtung steuerbar. Somit können die Abstände der Greifvorrichtungen an der rotierenden Vorrichtung verändert werden.

Gemäß einer bevorzugten Ausführungsform kann mittels der dem jeweiligen Übergabearm zugeordneten elektronischen Steuervorrichtung die Anpassung der Weite der Greifarme der Greifvorrichtungen eingestellt werden.

Gemäß einer weiteren bevorzugten Ausführungsform kann durch die elektronische Steuervorrichtung die Drehzahl der rotierenden Vorrichtung gesteuert werden, insbesondere kann mittels der elektronischen Steuerung die Drehzahl des Transfersterns geregelt werden.

Gemäß einer bevorzugten Ausführungsform ist auf der rotierenden Vorrichtung ein Drehverteiler angeordnet. Dieser umfasst beispielsweise Mittel zur Übertragung elektrischer Signale. Dabei kann es sich vorzugsweise um Mittel zur kabellosen Signalübertragung wie z.B. WLAN handeln. Weiterhin kann der Drehverteiler Mittel zur Energieversorgung umfassen. Auch hierbei ist es wiederrum denkbar, dass diese Mittel drahtlos sind. Insbesondere ist eine induktive Energieübertragung möglich. Dabei wird die elektrische Energie kontaktlos von einem fest verlegten Leiter auf einen oder mehrere mobile Verbraucher übertragen. Der Drehverteiler kann zudem Mittel zur Verteilung gasförmiger und / oder flüssiger Medien aufweisen. Dadurch ist es beispielsweise möglich, die Vorformlinge mit steriler Luft o.ä. auszublasen und somit zu sterilisieren o.ä:

Gemäß einer bevorzugten Ausführungsform ist die Steuervorrichtung spritzwassergeschützt ausgeführt, so dass eine einfache Reinigung der Vorrichtung möglich ist.

Durch die Anordnung der Steuerung zur Regulierung der Abstände auf der rotierenden Vorrichtung und nicht in der zweiten Verarbeitungsvorrichtung - insbesondere in einem Blasformmodul - ist eine sehr kompakte platzsparende Bauweise möglich.

Die Erfindung betrifft weiterhin ein Verfahren zum Überführen von Artikeln von einer ersten Verarbeitungsvorrichtung zu einer zweiten Verarbeitungsvorrichtung, wobei der Abstand der Artikel in der ersten Verarbeitungsvorrichtung ungleich dem Abstand der Artikel in der zweiten Verarbeitungsvorrichtung ist. Das Überführen der Artikel erfolgt mittels einer rotierenden Vorrichtung, die eine Mehrzahl von Übergabearmen mit Greifvorrichtungen zum Greifen und Festhalten der Artikel und Servormotoren aufweist, wobei die Greifvorrichtungen elektronisch gesteuert werden. Erfindungsgemäß ist jedem Übergabearm jeweils eine elektronische Steuervorrichtung zugeordnet. Insbesondere sind die elektronischen Steuervorrichtungen jeweils auf den Übergabearmen der rotierenden Vorrichtung angeordnet. Die elektronischen Steuervorrichtungen steuern Servomotoren an, wodurch die Abstände der Greifvorrichtungen an der rotierenden Vorrichtung verändert werden können. Die Steuerung der Beabstandung der Artikel erfolgt jeweils durch die dem jeweiligen Übergabearm zugeordnete elektronische Steuervorrichtung

Gemäß einer bevorzugten Ausführungsform regelt die Steuervorrichtung die Drehzahl der rotierenden Vorrichtung.

Gemäß einer Ausführungsform werden vorgewärmte Vorformlinge aus einem Heizmodul durch eine erste rotierende Vorrichtung entnommen. Anschließend werden die Vorformlinge durch die erste rotierende Vorrichtung an ein Blasformmodul übergeben. Die Abstände zwischen den Vorformlingen werden bei der Übergabe durch die erste rotierende Vorrichtung an das Blasformmodul verändert. Insbesondere werden die Abstände zwischen den Vorformlingen vergrößert.

Die Vorformlinge werden im Blasmodul zu Behältern, insbesondere Flaschen, umgeformt. Durch eine zweite rotierende Vorrichtung werden die blasgeformten Behälter aus dem Blasformmodul entnommen. Vorzugsweise werden die erste und die zweite rotierende Vorrichtung mit derselben Drehzahl betrieben.

Vorzugsweise ist die Steuerung der rotierenden Transfervorrichtung an die Maschinensteuerung angeschlossen, so dass einfach eine gemeinsame Koordination erfolgen kann.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.
Figur 1 zeigt schematisch die Anordnung eines Transfersterns zwischen zwei Verarbeitungsvorrichtungen.
Figur 2 zeigt eine erste Ausführungsform eines Transfersterns mit oben angeordneter Steuerung.
Figur 3 zeigt eine zweite Ausführungsform eines Transfersterns mit oben angeordneter Steuerung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

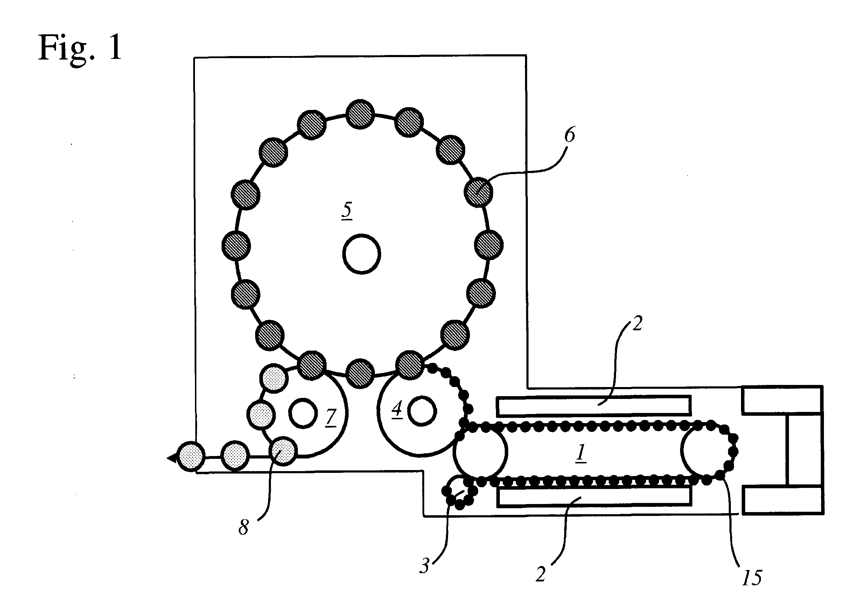

**Figur 1** zeigt schematisch die Anordnung eines Transfersterns 4 zwischen zwei Verarbeitungsvorrichtungen 1, 5.

Vorformlinge 15 werden über einen Einlaufstern 3 einer Heizstrecke 1 zugeführt. Durch in Heizgassen 2 angeordnete IR- Strahler werden die Vorformlinge 15 auf die gewünschte Temperatur gebracht, die für die anschließende Umformung in einem Blasformmodul 5 notwendig ist.

Über einen Transferstern 4 werden die Vorformlinge 15 aus der Heizstrecke 1 entnommen und dem Blasformmodul 5 zugeführt. Der Abstand zwischen den Vorformlingen 15 in der Heizstrecke 1 ist im allgemeinen geringer als der Abstand zwischen den Vorformlingen 15 in den Blasformen 6 im Blasformmodul 5, d.h. der Abstand zwischen den Vorformlingen 15 muss entsprechend der Größe und dem Abstand der verwendeten Blasformen 6 geändert, insbesondere erweitert, werden. Herkömmlicherweise geschieht dies durch eine dem Blasformmodul 5 zugeordnete Steuerung.

Anschließend werden die blasgeformten Behälter 8 über einen Auslaufstern 7 dem Blasformmodul 5 entnommen und weiteren Verarbeitungsmaschinen zugeführt.

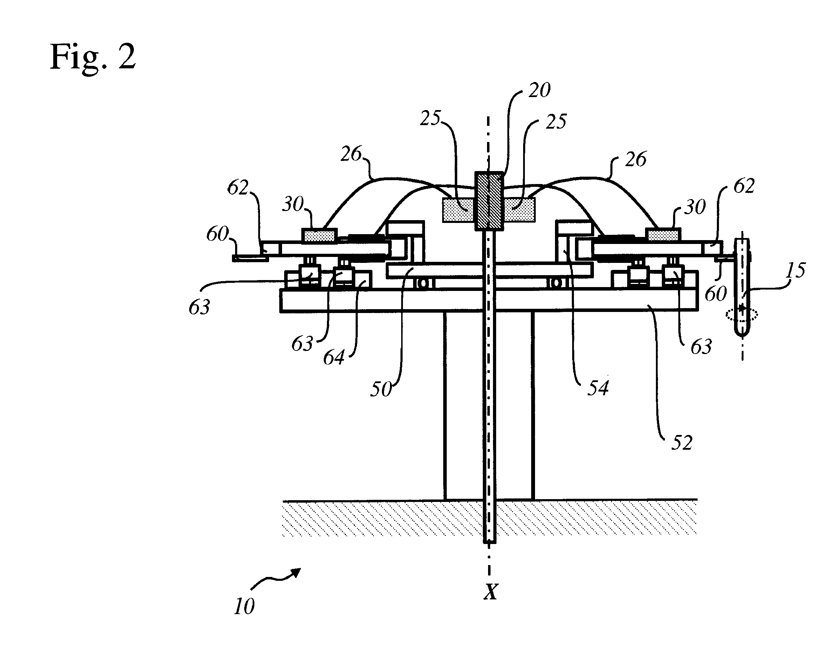

**Figur 2** zeigt eine erste Ausführungsform eines Transfersterns 10 mit einem ersten Drehverteiler 20 und mit mindestens einer auf dem Transferstern 10 angeordneten Steuerung 30.

Der Transferstern 10 umfasst einen Drehteller 50, der auf einem Tisch 52 beweglich gelagert ist, durch dessen Mittelpunkt eine senkrecht stehende vertikale Drehachse X verläuft. An dem Drehteller 50 sind Übergabearme 62 mit Greifvorrichtungen 60 angeordnet, die über Laufrollen 63 auf dem Tisch 52 beweglich und über eine Lagerung 54 auf dem Drehteller 50 beweglich gelagert sind.

Die Greifvorrichtungen 60 dienen der Halterung der zu transportierenden Artikel. Im gezeigten Ausführungsbeispiel werden Vorformlinge 15 gehaltert und transportiert. Der gewünschte ungleichförmige Bewegungsablauf der Greifvorrichtungen 60 wird mittels einer Kurvenscheibe 64 erzeugt.

Die Steuerung der Übergabearme 62 erfolgt mit einer Steuereinheit 30, wobei jedem Übergabearm 62 jeweils eine Steuereinheit 30 zugeordnet ist. Die Steuereinheit 30 kann weiterhin der Steuerung der Greifbewegung der Greifarme (nicht dargestellt) der Greifvorrichtungen 60 dienen, insbesondere kann mittels der Steuereinheit 30 die Weite der Greifarme den zu transportierenden Artikeln, beispielsweise dem Durchmesser der Vorformlinge 15, angepasst werden.

Auf der zentralen Drehachse X ist ein erster Drehverteiler 20 angeordnet. Weiterhin ist ein elektrischer (Dreh)-Verteiler 25 zur elektrischen Versorgung der Steuereinheiten 30 an der Drehachse X angeordnet.

Der Drehverteiler 20 umfasst beispielsweise Mittel zur Energieversorgung. Diese Mittel können gemäß einer bevorzugten Ausführungsform drahtlos übertragen werden. Dies ist beispielsweise mittels induktiver Energieübertragung möglich, wobei die elektrische Energie kontaktlos von einem fest verlegten Leiter auf einen oder mehrere mobile Verbraucher übertragen wird.

Alternativ kann der Drehverteiler 20 Mittel zur Verteilung gasförmiger und / oder flüssiger Medien aufweisen. Dadurch wäre es beispielsweise möglich, die Vorformlinge 15 mit steriler Luft o.ä. auszublasen und somit vor dem Blasformen zu sterilisieren.

Im gezeigten Ausführungsbeispiel ist vorgesehen, dass die elektrischen Signale von dem elektrischen (Dreh)-Verteiler 25 zu den Steuereinheiten 30 über Zuleitungen 26 übertragen werden. Alternativ kann vorgesehen sein, dass die elektrischen Signale kabellos übertragen werden.

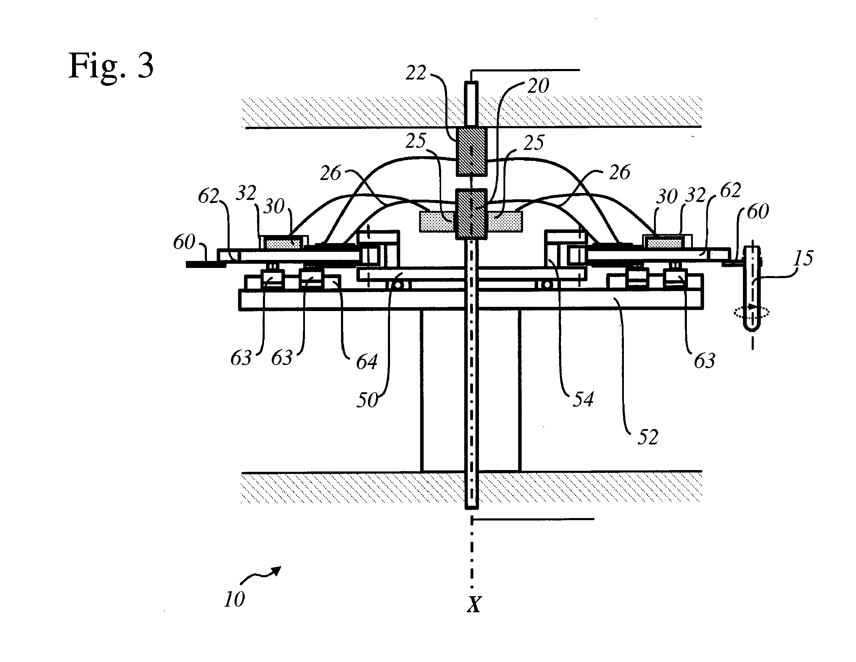

**Figur 3** zeigt eine zweite Ausführungsform eines Transfersterns 10 mit einem ersten Drehverteiler 20, einem zweiten Drehverteiler 22 und mit einer auf dem Transferstern 10 angeordneten Steuerung 30. Die Steuerung 30 ist in diesem Fall in einem Gehäuse 32 angeordnet, in dem sie vor Spritzwasser geschützt ist.

Bei dieser Ausführungsform ist zusätzlich ein zweiter Drehverteiler 22 oberhalb des ersten Drehverteilers 20 angeordnet, so dass die Versorgung mit einem weiteren der bereits beschriebenen Mittel, insbesondere mit Mitteln zur Energieversorgung und Signalübertragung und mit Mitteln zur Verteilung gasförmiger oder flüssiger Medien, möglich ist.

Die vorliegende Erfindung wurde insbesondere unter Bezugnahme auf ein Heizmodul 1 und eine Blasmaschine 5 zur Blasumformung von Kunststoffvorformlingen 15 in Kunststoffbehältnisse beschrieben. Es wird jedoch darauf hingewiesen, dass ein erfindungsgemäßer Transferstern 10 auch zum Überführen von Behältnissen zwischen anderen Verarbeitungsvorrichtungen, beispielsweise Befüllungsvorrichtungen für Behältnisse, Sterilisationsvorrichtungen für Behältnisse und dergleichen, Verwendung finden kann.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Heizstrecke
- 2: Heizgasse
- 3: Einlaufstern
- 4: Transferstern
- 5: Blasformmodul
- 6: Blasform
- 7: Auslaufstern
- 10: Transferstern
- 15: Vorformling
- 20: erster Drehverteiler
- 22: zweiter Drehverteiler
- 25: Elektrischer Verteiler
- 26: Kabel / Zuleitung
- 30: Steuerungseinheit
- 32: Gehäuse
- 50: Drehteller
- 52: Tisch
- 54: Lagerung
- 60: Greifvorrichtung
- 62: Übergabearm
- 63: Laufrolle
- 64: Kurvenscheibe
- X: Drehachse

## Patentansprüche

1. Rotierende Vorrichtung (10) zum Transport von Artikeln (15) von einer ersten Verarbeitungsvorrichtung (1) zu einer zweiten Verarbeitungsvorrichtung (5), mit einer Mehrzahl von Übergabearmen (62) mit Greifvorrichtungen (60) zum Greifen und Festhalten der Artikel (15), wobei die Greifvorrichtungen (60) elektronisch steuerbar sind, so dass der Abstand der durch die rotierende Vorrichtung (10) an die zweiten Verarbeitungsvorrichtung (5) weitergegebenen Artikel (15) ungleich dem Abstand der durch die rotierende Vorrichtung (10) von der ersten Verarbeitungsvorrichtung (1) entnommenen Artikel (15) ist, **dadurch gekennzeichnet, dass** den Übergabearmen (62) mit den Greifvorrichtungen (60) Servomotoren und jeweils eine elektronische Steuervorrichtung (30) zugeordnet sind, wobei jeweils eine elektronische Steuervorrichtung (30) auf jeweils einem Übergabearm (62) der rotierenden Vorrichtung (10) angeordnet ist, wobei der Abstand der in die zweite Verarbeitungsvorrichtung (5) einlaufenden Artikel (15) durch die Steuervorrichtung (30) der rotierenden Vorrichtung (10) steuerbar ist, wobei die den Übergabearmen (62) zugeordneten Greifvorrichtungen (60) durch die Servomotoren und die dem jeweiligen Übergabearm (62) zugeordnete elektronische Steuervorrichtung (30) steuerbar und somit die Abstände der Greifvorrichtungen (60) an der rotierenden Vorrichtung (10) veränderbar sind.

2. Rotierende Vorrichtung (10) nach Anspruch 1, wobei durch die dem jeweiligen Übergabearm (62) zugeordnete elektronische Steuervorrichtung (30) die Anpassung der Weite der Greifarme der Greifvorrichtungen (60) einstellbar ist.

3. Rotierende Vorrichtung (10) nach Anspruch 1 oder 2, wobei durch die elektronische Steuervorrichtung (30) die Drehzahl der rotierenden Vorrichtung (20) steuerbar ist.

4. Rotierende Vorrichtung (10) nach einem der voranstehenden Ansprüche, wobei auf der rotierenden Vorrichtung (10) mindestens ein Drehverteiler (20, 22, 25) angeordnet ist.

5. Rotierende Vorrichtung (10) nach Anspruch 4, wobei der mindestens eine Drehverteiler (20, 22, 25) Mittel zur Übertragung elektrischer Signale und / oder Mittel zur Energieversorgung und / oder Mittel zur Verteilung gasförmiger und / oder flüssiger Medien aufweist.

6. Rotierende Vorrichtung (10) nach einem der voranstehenden Ansprüche, wobei die Steuervorrichtung (30) spritzwassergeschützt ist.

7. Rotierende Vorrichtung (10) nach einem der voranstehenden Ansprüche, wobei die rotierende Vorrichtung (10) ein Transferstern ist.

8. Verfahren zum Überführen von Artikeln (15) von einer ersten Verarbeitungsvorrichtung (1) zu einer zweiten Verarbeitungsvorrichtung (5), wobei der Abstand der Artikel (15) in der ersten Verarbeitungsvorrichtung (1) ungleich dem Abstand der Artikel (15) in der zweiten Verarbeitungsvorrichtung (5) ist, wobei das Überführen mittels einer rotierenden Vorrichtung (10) zum Transport von Artikeln (15) erfolgt, die eine Mehrzahl von Übergabearmen (62) mit Greifvorrichtungen (60) zum Greifen und Festhalten der Artikel (15) und Servomotoren aufweist, wobei die Greifvorrichtungen (60) elektronisch gesteuert werden, **dadurch gekennzeichnet, dass** jedem Übergabearm (62) jeweils eine elektronische Steuervorrichtung (30) zugeordnet ist, wobei die elektronischen Steuervorrichtungen (30) jeweils auf den Übergabearmen (62) der rotierenden Vorrichtung (10) angeordnet ist und wobei die elektronischen Steuervorrichtungen (30) Servomotoren ansteuern, so dass die Abstände der Greifvorrichtungen an der rotierenden Vorrichtung (10) verändert werden , wobei die Steuerung der Beabstandung der Artikel (15) jeweils durch die dem jeweiligen Übergabearm (62) zugeordnete elektronische Steuervorrichtung erfolgt.

9. Verfahren nach Anspruch 8, wobei die Steuervorrichtung (30) die Drehzahl, mit der die rotierende Vorrichtung (10) betrieben wird, regelt.

10. Verfahren nach Anspruch 8 oder 9, **gekennzeichnet durch** die folgenden Schritte:
• Entnahme von vorgewärmten Vorformlingen (15) aus einem Heizmodul (1) durch eine erste rotierende Vorrichtung (4, 10);
• Übergabe der Vorformlinge (15) an ein Blasformmodul (5);
• Umformen der Vorformlinge (15) im Blasformmodul (5) zu Behältern (8);
• Entnahme der blasgeformten Behälter (8) aus dem Blasformmodul (5) durch eine zweite rotierende Vorrichtung (6)
• wobei die erste und die zweite rotierende Vorrichtung (4, 10, 6) mit derselben Drehzahl betrieben werden und
• wobei die Abstände zwischen den Vorformlingen (15) bei Übergabe **durch** die erste rotierende Vorrichtung (4, 10) verändert werden.

## Claims

1. Rotating device (10) for the transport of articles (15) from a first processing device (1) to a second processing device (5), with a plurality of transfer arms (62) with gripping devices (60) for gripping and holding the articles (15), wherein the gripping devices (60) are electronically controlled, so that the distance of the articles (15) transferred to the second processing device (5) by the rotating device (10) is different from the distance of the articles (15) taken from the first processing device (1) by the rotating device (10), **characterized in that** servo motors and an electronic control device (30) are assigned to each transfer arm (62) with gripping devices (60), wherein one electronic control device (30) is arranged on each transfer arm (62) of the rotating device (10), wherein the distance of the articles (15) transferred to the second processing device (5) is controlled by the electronic control devices (30) of the rotating device (10), wherein the gripping devices (60) associated with the transfer arms (62) are controlled by the servo motors and the electronic control device assigned to each transfer arms (62) and whereby the distances between the gripping devices (60) of the rotating device (10) can be changed.

2. Rotating device (10) according to claim 1, wherein the adjustment of the width of the gripping arms of the gripping devices (60) is controlled by the electronic control device (30) assigned to the respective transfer arm (62).

3. Rotating device (10) according to claims 1 or 2, wherein the rotational speed of the rotating device (20) is controllable by the electronic control device (30).

4. Rotating device (10) according to one of the previous claims, wherein at least one rotary distributor (20, 22, 25) is arranged on the rotating device (10).

5. Rotating device (10) according to claim 4, wherein the at least one rotary distributor (20, 22, 25) comprises means for transmitting electrical signals and / or means for power supply and / or means for distributing gaseous and / or liquid media.

6. Rotating device (10) according to one of the previous claims, wherein the control device (30) is splashproof.

7. Rotating device (10) according to one of the previous claims, wherein the rotating device (10) is a transfer star.

8. Method for the transfer of articles (15) from a first processing device (1) to a second processing device (5), whereby the distance between the articles (15) in the first processing device (1) is different from the distance between the articles (15) in the second processing device (5), whereby the transfer is done by a rotating device (10) for the transport of articles (15) that comprises a plurality of transfer arms (62) with gripping devices (60) for gripping and holding of articles (15) and servo motors, wherein the gripping devices (60) are electronically controlled, **characterized in that** an electronic control device (30) is assigned to each transfer arm (62), wherein the electronic control device (30) is each arranged on top of the respective transfer arm (62) of the rotating device (10) and wherein the electronic control devices (30) control servo motors, so that the distance between the gripping devices on the rotating device (10) is changeable, wherein the control of the distance between the articles (15) is done by the electronic control device associated with the respective transfer arm (62).

9. Method according to claim 8, wherein the control device (30) controls the rotational speed at which the rotating device (10) is operated.

10. Method according to claim 8 or 9, **characterized by** the following steps:
• removal of pre- heated preforms (15) from a heating unit (1) by a first rotating device (4, 10);
• transfer of the preforms (15) to a blow molding device (5);
• converting the preforms (15) into containers (8) in the blow molding device (5);
• removal of the blow molded containers (8) from the blow molding device (5) by a second rotating device (6)
• whereby the first and the second rotating device (4, 10, 6) are run with the same speed of rotation and
• whereby the distances between the preforms (15) are adjusted when they are handed over by the first rotating device (4, 10).

## Revendications

1. Dispositif rotatif (10) de transport d'articles (15) depuis un premier dispositif de traitement (1) vers un deuxième dispositif de traitement (5), comprenant une pluralité de bras de transfert (62) avec des dispositifs de préhension (60) pour saisir et maintenir les articles (15), lesdits dispositifs de préhension (60) pouvant être commandés électroniquement de sorte que la distance des articles (15) qui sont transférés par ledit dispositif rotatif (10) au deuxième dispositif de traitement (5) est inégale à la distance des articles (15) qui sont prélevés du premier dispositif de traitement (1) par ledit dispositif rotatif (10), **caractérisé par le fait qu'**auxdits bras de transfert (62) avec les dispositifs de préhension (60) sont associés des servomoteurs et respectivement un dispositif de commande (30) électronique, un dispositif de commande (30) électronique respectivement étant disposé sur respectivement un bras de transfert (62) du dispositif rotatif (10), la distance des articles (15) entrant dans ledit deuxième dispositif de traitement (5) pouvant être commandée par ledit dispositif de commande (30) du dispositif rotatif (10), les dispositifs de préhension (60) associés aux bras de transfert (62) pouvant être commandés par les servomoteurs et le dispositif de commande (30) électronique associé au bras de transfert (62) respectif, et, ainsi, les distances des dispositifs de préhension (60) pouvant être modifiées sur le dispositif rotatif (10).

2. Dispositif rotatif (10) selon la revendication 1, dans lequel l'adaptation de la distance des bras de préhension des dispositifs de préhension (60) peut être réglée par le dispositif de commande (30) électronique associé au bras de transfert (62) respectif.

3. Dispositif rotatif (10) selon la revendication 1 ou 2, dans lequel la vitesse de rotation du dispositif rotatif (20) peut être commandée par ledit dispositif de commande (30) électronique.

4. Dispositif rotatif (10) selon l'une quelconque des revendications précédentes, dans lequel au moins un distributeur tournant (20, 22, 25) est disposé sur le dispositif rotatif (10).

5. Dispositif rotatif (10) selon la revendication 4, dans lequel ledit au moins un distributeur tournant (20, 22, 25) présente des moyens de transmission de signaux électriques et / ou des moyens d'alimentation en énergie et / ou des moyens de distribution de milieux gazeux et / ou liquides.

6. Dispositif rotatif (10) selon l'une quelconque des revendications précédentes, dans lequel ledit dispositif de commande (30) est protégé contre les éclaboussures d'eau.

7. Dispositif rotatif (10) selon l'une quelconque des revendications précédentes, dans lequel le dispositif rotatif (10) est une étoile de transfert.

8. Procédé de transfert d'articles (15) depuis un premier dispositif de traitement (1) à un deuxième dispositif de traitement (5), la distance des articles (15) dans ledit premier dispositif de traitement (1) étant inégale à la distance des articles (15) dans ledit deuxième dispositif de traitement (5), le transfert étant réalisé par le biais d'un dispositif rotatif (10) de transport d'articles (15) qui présente une pluralité de bras de transfert (62) avec des dispositifs de préhension (60) pour saisir et maintenir les articles (15) ainsi que des servomoteurs, les dispositifs de préhension (60) étant commandés électroniquement, **caractérisé par le fait qu'**à chaque bras de transfert (62) est associé respectivement un dispositif de commande (30) électronique, les dispositifs de commande (30) électroniques étant disposés chacun sur les bras de transfert (62) du dispositif rotatif (10), et les dispositifs de commande (30) électroniques commandant des servomoteurs de sorte que les distances des dispositifs de préhension sont modifiées sur le dispositif rotatif (10), la commande de l'espacement des articles (15) se faisant respectivement par le dispositif de commande électronique associé au bras de transfert (62) respectif.

9. Procédé selon la revendication 8, dans lequel le dispositif de commande (30) règle la vitesse de rotation à laquelle le dispositif rotatif (10) est actionné.

10. Procédé selon la revendication 8 ou 9, **caractérisé par** les étapes suivantes :
- sortir, dans un module de chauffage (1), des préformes préchauffés (15) par l'intermédiaire d'un premier dispositif rotatif (4, 10),
- transférer les préformes (15) à un module de moulage par soufflage (5) ;
- former les préformes (15) dans ledit module de moulage par soufflage (5) pour obtenir des récipients (8) ;
- retirer les récipients (8) moulés par soufflage, dudit module de moulage par soufflage (5) par l'intermédiaire d'un deuxième dispositif rotatif (6) ;
- lesdits premier et deuxième dispositifs rotatifs (4, 10, 6) étant actionnés à la même vitesse de rotation et
- les distances séparant les préformes (15) étant modifiées lors du transfert réalisé par ledit premier dispositif rotatif (4, 10).
